Europäisches Patentamt

European Patent Office

Office européen des brevets

(11) Veröffentlichungsnummer: **0 401 469**

**A1**

## (12) EUROPÄISCHE PATENTANMELDUNG

(21) Anmeldenummer: 90103629.3

(22) Anmeldetag: 24.02.90

(51) Int. Cl.5: **B65G 47/53, B65G 47/46**

(30) Priorität: 03.06.89 DE 3918196

(43) Veröffentlichungstag der Anmeldung:
**12.12.90 Patentblatt 90/50**

(84) Benannte Vertragsstaaten:
**AT BE CH DK ES FR GB GR IT LI LU NL SE**

(71) Anmelder: **L. & C. ARNOLD GMBH**
**Karlstrasse 24**
**D-7060 Schorndorf(DE)**

(72) Erfinder: **Schlabbers, Günther**
**Utrechterstrasse 22**
**D-4170 Geldern 1(DE)**

(74) Vertreter: **Beyer, Rudi**
**Patentanwalt Dipl.-Ing. Rudi Beyer Am**
**Dickelsbach 8**
**D-4030 Ratingen 6 (Hösel)(DE)**

(54) Aussortiervorrichtung.

(57) Die Erfindung betrifft eine Aussortiervorrichtung für hohe Stundenleistungen, wobei ankommende Stückgüter (3) unterschiedlicher Quer- und/oder Höhenabmessungen schonend aussortiert werden können. Die erfindungsgemäße Aussortiervorrichtung (4) arbeitet mit einem Abschiebearm (14), der über einen Schwenkarm (15) und einen Antriebsarm (22) geführt ist, wobei der letztere über einen Kurbeltrieb mit Exzenter (26, 27) angetrieben wird.

EP 0 401 469 A1

## Aussortiervorrichtung

Die Erfindung betrifft eine Aussortiervorrichtung, mit wenigstens einem motorisch angetriebenen Hauptförderer, auf dem Stückgüter herangefördert werden, wobei dem Hauptförderer mindestens ein motorisch antreibbarer Abzugs- oder Querförderer zugeordnet ist, der das mittels eines motorisch betätigbaren Schwenkabschiebers auszusortierende Stückgut wegfördert, wobei der Schwenkabschieber einen Schwenkarm und einen Abschiebearm aufweist und der Abschiebearm oberhalb der Oberfläche des Hauptförderers motorisch hin- und herbeweglich angeordnet ist und diese Arme einen spitzen Winkel zueinander einnehmen, wobei in der Ruhestellung der Abschiebearm annähernd parallel zur Förderrichtung des Hauptförderers in Höhe der Stückgüter außerhalb des Transportbereichs der Stückgüter oberhalb des Hauptförderers positioniert ist, wobei der Abschiebearm über einen Exzenterantrieb antreibbar ist und die Aussortiervorrichtung auf einer Seite des Hauptförderers schwenkbeweglich angeordnet ist, wobei der Angriffspunkt des Exzenters ggf. verstellbar ist.

Eine derartige Aussortiervorrichtung bildet den Gegenstand der auf die Anmelderin zurückgehenden DE-OS 37 37 543 und der inhaltsgleichen EP-OS 0 314 881.

Aus der US-PS 4,298,117 ist eine Aussortiervorrichtung mit wenigstens einem motorisch angetriebenen Hauptförderer vorbekannt, auf dem Stückgüter herangefördert werden, wobei dem Hauptförderer mindestens ein motorisch antreibbarer Abzugs- oder Querförderer zugeordnet ist, der das mittels eines motorisch betätigbaren Schwenkabschiebers auszusortierende Stückgut wegfördert, wobei der Schwenkabschieber aus einem Schwenkarm und einem Abschiebearm besteht, und dieser Arm in Richtung der Schwenkachse des Schwenkabschiebers gesehen in einem Winkel - vorzugsweise einem spitzen Winkel - zueinander ausgerichtet und in Richtung der Schwenkachse beabstandet und in unterschiedlichen Ebenen angeordnet und einstückig starr miteinander verbunden sind, und die Schwenkachse am freien Ende des Schwenkarmes angeordnet ist, wobei in der Ruhestellung der Abschiebearm annähernd parallel zur Förderrichtung des Hauptförderers in Höhe der Stückgüter außerhalb des Transportbereichs der Stückgüter auf dem Hauptförderer positioniert ist und der Schwenkarm den Hauptförderer untergreift, wobei der Schwenkabschieber über einen Exzenter antreibbar ist.

Diese vorbekannte Konstruktion baut relativ aufwendig. Nachteilig ist auch das abrupte Umlenken der auszusortierenden Stückgüter, was einmal darauf zurückzuführen ist, daß die Schwenkachse etwa außermittig zur Förderrichtung des Hauptförderers in dessen senkrechter Projektion angeordnet ist. Zum anderen erlaubt diese Konstruktion auch keine Anpassung oder feinfühlige Einstellung der Umlenkbewegung des auszusortierenden Gutes.

Der Erfindung liegt die Aufgabe zugrunde, eine Aussortiervorrichtung der gattungsgemäß vorausgesetzten Art dahingehend zu verbessern, daß bei unterschiedlichen Aussortierleistungen auch in den äußeren Abmessungen unterschiedliche und ggf. auch sehr flache Stückgüter in beliebiger Aufeinanderfolge vom Hauptförderband auf einen Querförderer aussortierbar sind.

Die Aufgabe wird durch die in **Patentanspruch 1** wiedergegebenen Merkmale gelöst.

Die Anlagefläche des Abschiebearms steht in Ausgangsstellung annähernd parallel zur Hauptförderrichtung der Stückgüter auf dem Hauptförderer.

Die Drehpunktanordnung des Schwenkarms und des Antriebsarms in Abhängigkeit von den Armlängen ermöglichen, daß der Abschiebearm in seiner maximalen Schwenklage unter einem spitzen Winkel von z. B. 30° zur Förderrichtung auf dem Hauptförderer steht.

Die besondere Formgebung des Abschiebearms ermöglicht es, daß das Stückgut relativ weich abgeschoben wird. Große oder lange Stückgüter können sich besser weiter auf 90° drehen, da mehr Freiraum zur Verfügung steht.

Zusätzlich erlaubt diese Ausgestaltung der erfindungsgemäßen Aussortiervorrichtung einen kleineren Sicherheitsabstand zwischen den Stückgütern, was z. B. für die Paketaussortiervorrichtung in Hauptpostämtern von großem Vorteil ist.

Die Vorschwenkbewegung erfolgt in der ersten Hälfte der Exzenterbewegung relativ langsam, so daß das Stückgut nur geringen Beanspruchungen ausgesetzt ist. In der zweiten Hälfte der Exzenter-Vorbewegung wird das Stückgut stärker beschleunigt und zusätzlich stärker gedreht. In Verbindung mit einer Abzugsrolle wird durch diese Rotationsbewegung das Stückgut nach einer relativ kurzen Vorschwenkbewegung annähernd um 90° absortiert.

Durch Ausgestaltung der Aussortiervorrichtung mit einem Schwenkarm und einem Abschiebearm erfolgt eine zusätzliche Relativbewegung in Hauptförderrichtung, jedoch nur eine geringfügige Relativbewegung zwischen Stückgut und Anlagefläche des Abschiebearms.

Dadurch, daß sich in der ersten Hälfte der Vorschwenkbewegung die Stellung der Anlagefläche nur geringfügig zur Hauptförderrichtung ändert, besteht hier die besondere Möglichkeit, auch mittig auf der Förderstrecke ausgerichtete Stückgüter sicher abzuschieben. Demgegenüber muß bei einer vorbekannten Bauart das Fördergut unmittelbar am Abschieber vorbeigeführt werden, um einen einwandfreien Aussortiervorgang zu gewährleisten.

Ein weiterer Vorteil der Erfindung besteht darin, daß der Abschiebearm das Stückgut in eine Rotationsbewegung versetzt und deshalb der Schwenkwinkel zur Hauptförderrichtung relativ klein gehalten werden kann, wodurch sein mittleres wirksames Trägheitsmoment wesentlich kleiner ist, als dasjenige der vorbekannten Konstruktion. Dadurch erlaubt die Aussortiervorrichtung gemäß der Erfindung bei gleicher Antriebsleistung kürzere Schwenkzeiten des Abschiebearms.

Bei der erfindungsgemäßen Ausgestaltung lassen sich Aussortierleistungen von z. B. 6.000 Einheiten pro Stunde in Kombination mit Gurt- oder Stahlband mit Abzugsrolle und/oder Abzugsförderer sicher aussortieren. Dies ist von großem Vorteil z. B. bei der Paketförderung in großen Postämtern, bei der nicht nur diese großen Stückzahlen von Paketen anfallen, sondern die Pakete, d. h. die Stückgüter, auch äußerlich stark unterschiedliche Abmessungen aufweisen.

Aufgrund der platzsparenden einfachen Bauweise kann auch der Raum unterhalb des Obertrums z. B. für den Rücktransport von Stückgütern genutzt werden.

Die einfache und störungsfrei arbeitende Ausgestaltung mit einem Kurbel- oder Exzenterantrieb in Verbindung mit den wenigen Führungseinrichtungen verzichtet bewußt auf wartungsunfreundliche Gleitführungen. Der Antriebsarm unterscheidet sich in der Regel lediglich durch unterschiedliche Länge und einem zusätzlichen Anlenkpunkt an der Kurbelstange.

Die exakte Führung des Abschiebearms ermöglicht das Aussortieren von sehr flachem Stückgut von z. B. nur 5 mm Höhe, orthogonal gemessen von der Oberfläche des Hauptförderers.

Bevorzugte Grundstellung des Abschiebearms kann z. B. 0,5 bis 50, vorzugsweise 25 mm über Außenkante des Fördergurtes des Hauptförderers sein, da dann ein Verklemmen oder dgl. unmöglich ist.

In den **Patentansprüchen 2** bis **13** sind vorteilhafte Ausführungsformen der Erfindung beschrieben.

Weitere Vorteile ergeben sich im Zusammenhang mit nachfolgender Beschreibung der Zeichnung, in der die Erfindung an mehreren Ausführungsbeispielen - teils schematisch - veranschaulicht ist. Es zeigen:

Fig. 1 Die Anordnung verschiedener Ausführungsformen der Systemanordnung, und zwar mit zylindrisch angetriebener Abzugsrolle und Rutsche; mit konischer angetriebener Abzugsrolle und Rutsche und mit einer Aussortiervorrichtung mit angetriebenem Abzugsförderer;

Fig. 2 Eine vergrößerte Draufsicht auf eine erfindungsgemäße Ausführungsform mit schematischer Darstellung des Abschiebearms in unterschiedlichen Positionen;

Fig. 3 Einen Querschnitt durch einen Hauptförderer mit seitlich angeordneter Aussortiervorrichtung;

Fig. 4 Eine Rückansicht der Aussortiervorrichtung mit einer Rahmenkonstruktion und Antriebslagerung und

Fig. 5 eine ausschnittsweise Vergrößerung aus Fig. 2.

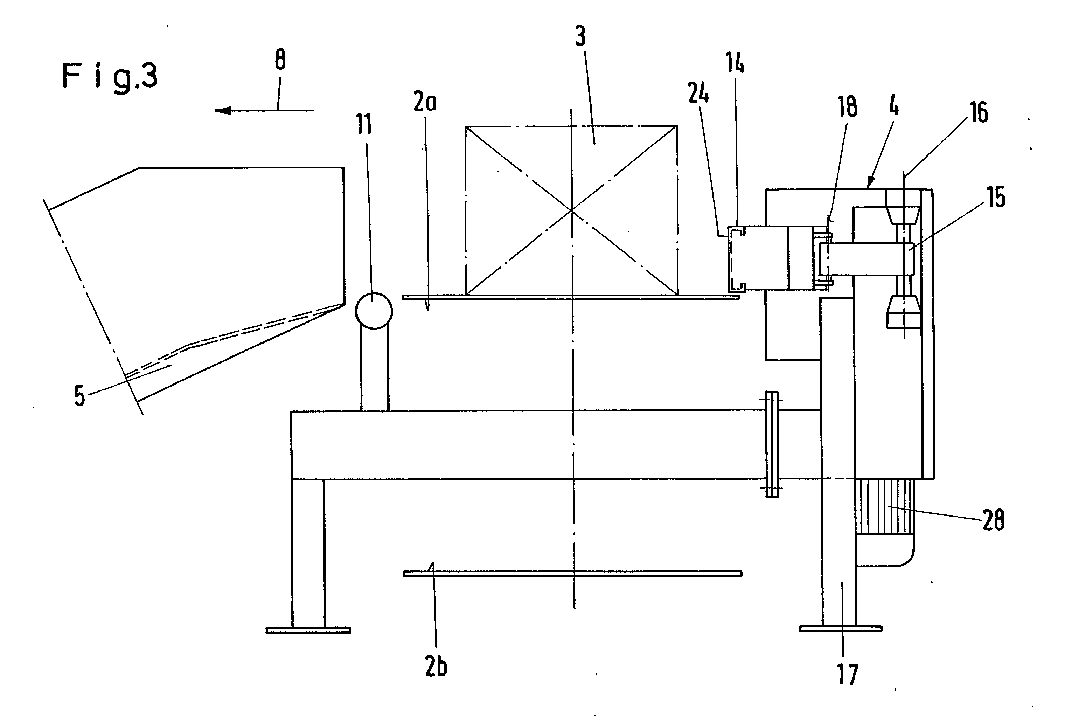

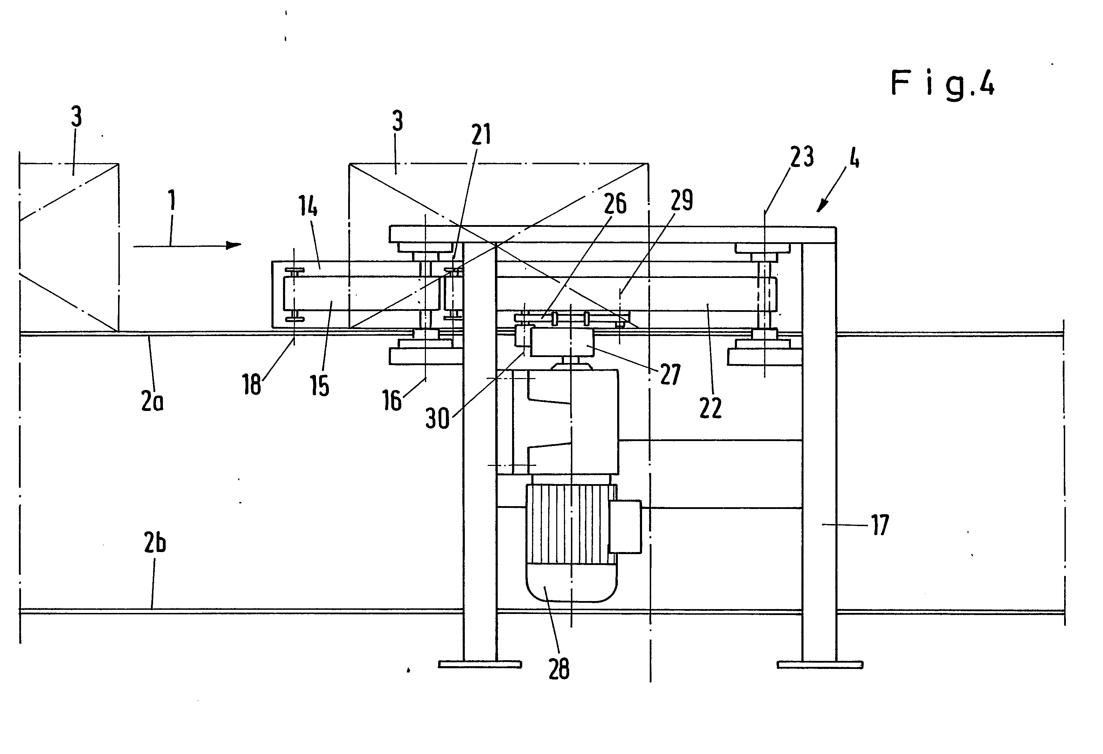

Mit dem Bezugszeichen 1 ist ein in Richtung des Pfeiles motorisch angetriebener Hauptförderer 2 bezeichnet, der bei den dargestellten Ausführungsformen als Gurtförderer ausgebildet ist, aber auch aus angetriebenen Rollenbahnen bestehen kann. Das Obertrum ist in den Fig. 3 und 4 mit dem Bezugszeichen 2a und das Untertrum mit dem Bezugszeichen 2b bezeichnet.

Auf dem Obertrum 2a des Hauptförderers 2 liegen in unregelmäßiger Reihenfolge Stückgüter 3 dicht - unter Berücksichtigung eines geringen Sicherheitsabstandes -beieinander. In der Zeichnung sind die Verhältnisse in allen Fällen unmaßstäblich dargestellt. Z. B. können auf dem Obertrum 2a unterschiedliche Schachteln für Medikamente angeordnet sein. Es ist aber auch möglich, daß sich auf dem Hauptförderer 2 Pakete mit unterschiedlichen Längen- und/oder Höhen- und/oder Querabmessungen bewegen wie dies z. B. in großen Postämtern tagtäglich vorkommt.

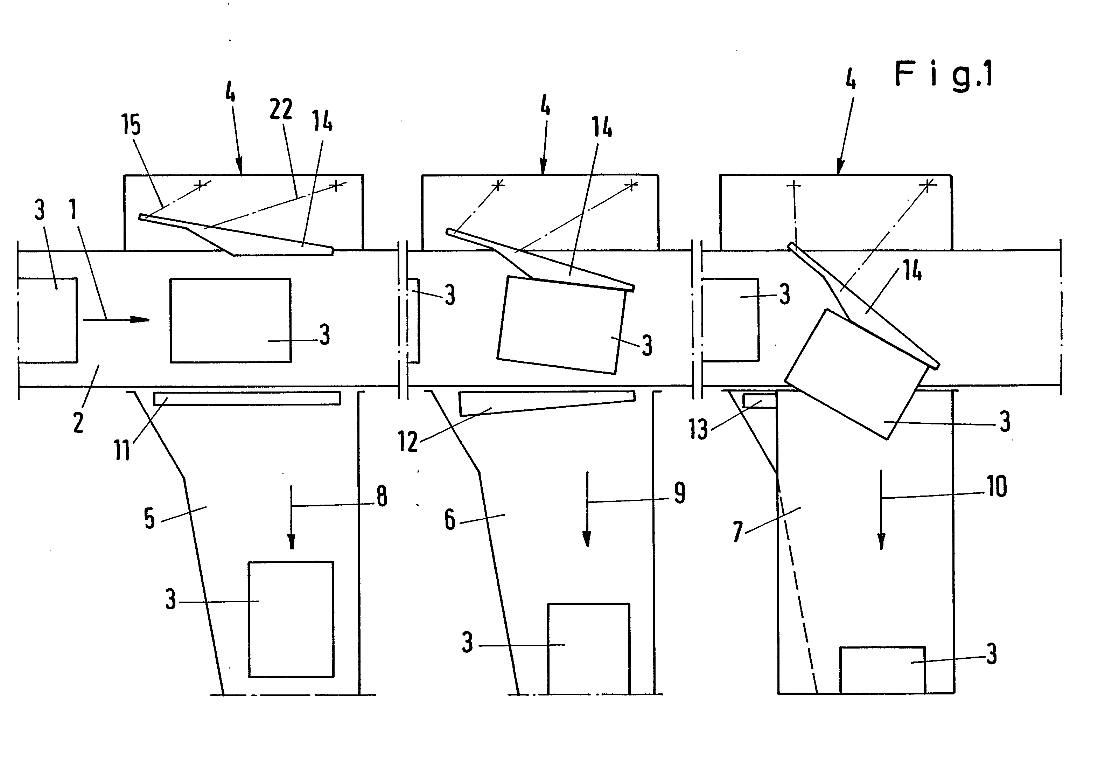

Bei der aus Fig. 1 ersichtlichen Ausführungsform sind in Förderrichtung des Hauptförderers 2 seitlich mehrere lediglich schematisch angeordnete Aussortiervorrichtungen 4 angeordnet, deren Aufbau weiter unten im einzelnen beschrieben ist.

Auf der den Aussortiervorrichtungen 4 jeweils gegenüberliegenden Seite des Hauptförderers 2 sind Querförderer 5, 6, 7 angeordnet, auf die die jeweils aussortierten Stückgüter 3 in Pfeilrichtung 8, 9 oder 10 abtransportiert werden. Der Querförderer 5 weist eine Rutsche und eine zylindrische, motorisch angetriebene Abzugsrolle 11 auf, während der Querförderer 6 ebenfalls eine Rutsche und eine konische, motorisch angetriebene Abzugsrolle 12 besitzt. Dagegen weist der Querförderer 7 einen motorisch angetriebenen Abzugsförderer 13 auf, der entweder als Bandförderer oder dgl. ausgebildet sein kann. Nicht dargestellt ist eine weitere mögliche Ausführungsform des Querförderers 7, bestehend aus einer angetriebenen Abzugsrolle mit einem anschließend angeordneten Bandförderer.

Für das Aussortieren der Stückgüter 3 können unterschiedliche, vorbestimmte Kriterien, wie Abmessungen, Farben, Postleitzahlen oder dgl. in Betracht kommen.

Es ist selbstverständlich auch möglich, mehr als drei Querförderer über die Länge eines Hauptförderers 2 anzuordnen, wie es auch möglich ist, statt mehrerer Querforderer nur einen solcher Querförderer dem Hauptförderer zuzuordnen oder aber auch auf beiden Seiten des Hauptförderers 2 Aussortiervorrichtungen und/oder Querförderer anzuordnen. Die Anzahl der Querförderer richtet sich nach den Betriebsgegebenheiten.

Die Aus sortiervorrichtung 4 weist einen Abschiebearm 14 auf, der im Querschnitt aus einem U-Profil (Fig. 3) besteht, dessen U-Schenkel in horizontalen Ebenen verlaufen und dessen Steg orthogonal zur Oberfläche des Obertrumes 2a angeordnet ist (Fig. 3). Dadurch ergibt sich eine relativ große Anlagefläche für die Stückgüter 3, so daß diese nicht beschädigt werden.

Mit dem Bezugszeichen 15 ist ein Schwenkarm bezeichnet, der in Fig. 1 lediglich schematisch angedeutet ist. Der Schwenkarm 15 ist um eine vertikal angeordnete Achse 16 in horizontaler Ebene um ein begrenztes Maß, also in Richtung X bzw. Y, schwenkbeweglich angeordnet. Die Schwenkachse 16 ist in einem Gestell 17 in bezug auf den Hauptförderer 2 fest angeordnet. Das Gestell 17 steht auf dem Boden neben dem Hauptförderer 2 und dient zur Anordnung und Lagerung von Teilen der Aussortiervorrichtung 4, die nachfolgend noch beschrieben werden. Die Schwenkachse 16 verläuft somit auch orthogonal zur Oberfläche des Obertrumes 2a des Hauptförderers 2. Des weiteren ist die Schwenkachse 16 mit ihrer Längsachse parallel zu einer weiteren Schwenkachse 18 angeordnet, mit der der Schwenkarm 15 an einem Lagervorsprung 19 des Abschiebearms 14 schwenkbeweglich angeordnet ist. Somit verläuft auch die Schwenkachse 18 vertikal.

Im Abstand zu dem Lagervorsprung 19 ist ein weiterer Lagervorsprung 20 angeordnet, in dem eine Schwenkachse 21 mit ihrer Längsachse parallel zu den Achsen 16 und 18 angeordnet ist. Die Schwenkachse 21 dient zur schwenkbaren Anlenkung eines Antriebsarmes 22, der bei den dargestell ten Ausführungsformen etwa doppelt so lang ist wie der Schwenkarm 15. An seinem der Schwenkachse 21 abgekehrten Ende ist der Antriebsarm 22 um eine Schwenkachse 23 ebenfalls in Richtung X bzw. Y, also in horizontaler Ebene parallel zum Schwenkarm 15 schwenkbeweglich angeordnet. Die Schwenkachse 23 verläuft parallel zu den Längsachsen der Schwenkachsen 16, 18 und 21, somit ebenfalls vertikal und ist gleichfalls in dem Gestell 17 fest, d. h. ortsunbeweglich, insbesondere ortsunbeweglich in bezug auf den Hauptförderer 2, angeordnet.

Die Winkel ε und ς sind nicht gleich, aber jeweils spitzwinklig, so daß der Schwenkarm 15 und der Antriebsarm 22 nicht parallel zueinander verlaufen.

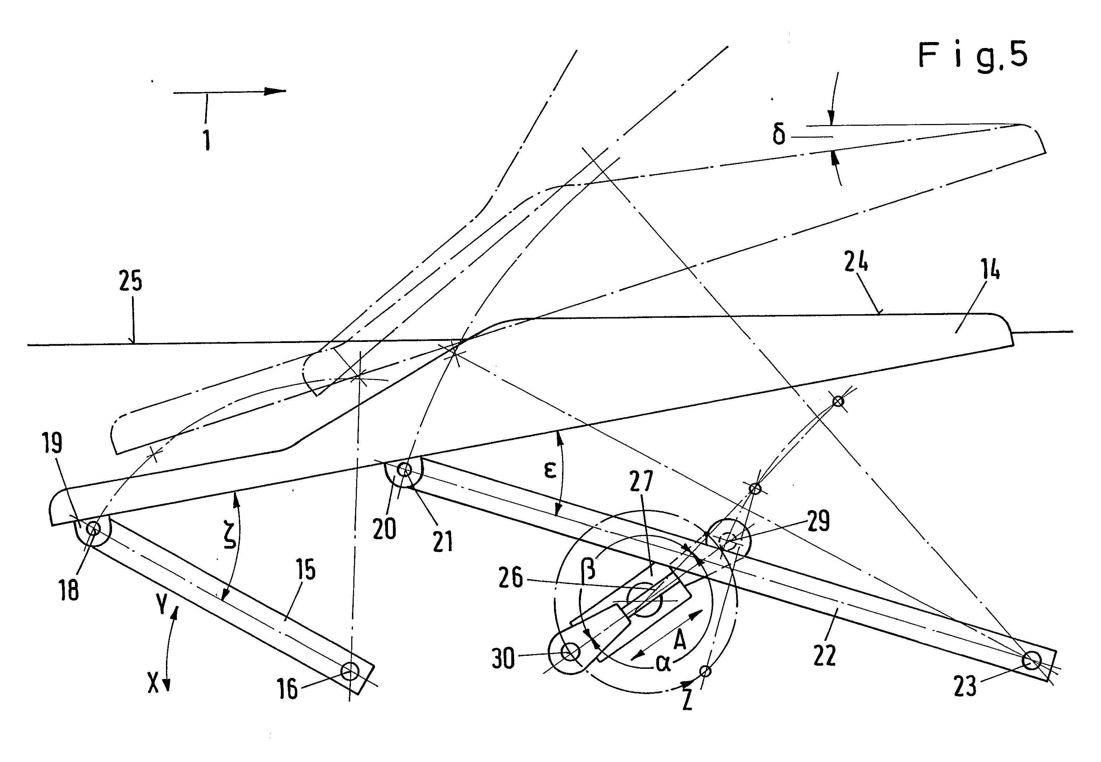

Der Abschiebearm 14 weist in der aus Fig. 5 ersichtlichen Draufsicht eine Anlagefläche 24 auf, die parallel oder im wesentlichen parallel zur äußeren längsseitigen Begrenzung des Obertrumes 2a des Hauptförderers 2 verläuft. Wie aus Fig. 5 ersichtlich ist, übergreift in der Ausgangsstellung der Abschiebearm 14 mit seiner Anlagefläche 24 die seitliche Begrenzung 25 des Hauptförderers 2 um ein gewisses Maß, so daß ein Einklemmen von Stückgütern 3 un möglich ist. Der Abstand zwischen der Unterkante des Abschiebearms 14 und der Oberkante des Obertrumes 2a des Hauptförderers 2 kann z. B. 5 mm betragen.

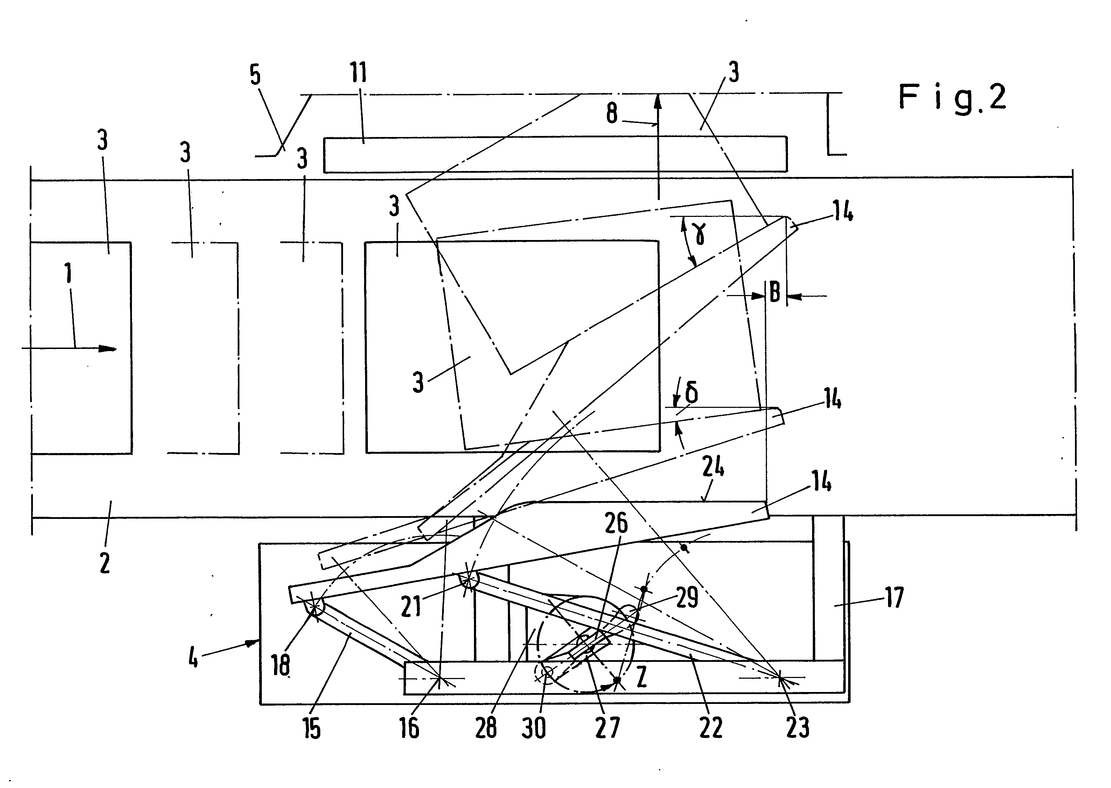

Der Abschiebearm 14 überstreicht parallel, also in horizontaler Ebene die Oberfläche des Obertrumes 2a. Fig. 5 zeigt mit ausgezogener Linie die Ausgangsstellung beim Abschiebevorgang des Abschiebearms 14 und mit strichpunktierten Linien unterschiedliche Winkelstellungen. Das gleiche gilt für die Darstellung in Fig. 2, bei der die obere, strichpunktierte Lage des Abschiebearms 14 die maximale Schwenkstellung desselben veranschaulicht (in der Zeichnungsebene gesehen).

Der Antriebsarm 22 ist über eine Kurbelstange 26 mit einem Exzenterantrieb 27 verbunden, der über einen kräftigen Antriebsmotor 28 von z. B. 1,1 KW Antriebsleistung angetrieben wird. Mit 30 ist ein Anlenkpunkt des Exzenterantriebs 27 bezeichnet, der sich in Richtung Z bewegt. Die bevorzugte Antriebsrichtung des Exzenterantriebs 27 ist durch die Pfeilrichtung Z (Fig. 5) angedeutet.

Der Antriebsmotor 28 ist unterhalb des Schwenkarms 15, des Antriebsarms 22 und des Abschiebearms 14 angeordnet. Der Abschiebearm 14, Schwenkarm 15 und Antriebsarm 22 bewegen sich somit synchron in horizontaler Ebene, wobei der Abschiebearm 14 seinen Anstellwinkel in bezug auf die Förderrichtung 1 und damit auch in bezug auf das ankommende Fördergut 3 ändert (Fig. 2 und 5).

Mit α ist der Drehwinkel für den Vorlauf des Exzenters, mit β der Drehwinkel für den Rücklauf des Exzenters, mit γ der Schwenkwinkel (Endlage), mit δ der Schwenkwinkel bei etwa α/2 bezeichnet

Wie aus Fig. 5 durch den Doppelpfeil A hervorgeht, läßt sich der Exzenter 27 zur Veränderung des Vor- und Rücklaufwinkels und damit zur Änderung der Abschiebegeschwindigkeit und des Rückhubes verstellen und arretieren.

Die Wirkungsweise ist folgende:
Auf dem Hauptförderer 2 werden in einem Mindestabstand zugeteilte Stückgüter 3 in verschiedener Größe und Ausdehnung in Richtung des Pfeiles 1 transportiert. Je nach Zielvorgabe werden die Stückgüter 3 über Vorderkantenimpuls oder dgl.

auf die Querförderer 5, 6 und 7 oder auf nur einen dieser Förderer, z. B. auf den Querförderer 5, abgeschoben.

Der Abschiebearm 14 der Aussortiervorrichtung 4 steht mit seiner Anlagefläche 24 parallel oder annähernd parallel zur Förderrichtung 1 und ist unmittelbar an der Außenkante 25 oberhalb derselben in einer zu dieser parallelen Ebene angeordnet oder überlappt diese Kante 25.

Mit anstehendem Abschiebeimpuls dreht der Antriebsmotor 28 den Exzenterantrieb 27 in Richtung Z (Fig. 5) und der Exzenter rückt über die Kurbelstange 26 gegen den Anlenkpunkt 29 und bewegt somit den Antriebsarm 22 horizontal in Richtung Bandmitte.

Über die Verbindung durch den Abschiebearm 14 wird gleichzeitig der Schwenkarm 15 mitbewegt. Durch die unterschiedliche Schwenkarmlänge von etwa 1 : 2 bewegt sich der Abschiebearm 14 in der ersten Hälfte der Vorbewegung annähernd parallel gegen das Stückgut 3 in Richtung Querförderer, z. B. 5.

Nachdem sich das Stückgut gegen die große Anlagefläche 24 abgestützt hat, wird es stärker beschleunigt und in eine Rotationsbewegung versetzt, so daß trotz des geringen Schwenkwinkels α das Stückgut 3 von der höherstehenden Abzugsrolle, z. B. 11 - ggf. über einen nicht dargestellten Reibbelag - übernommen wird. Aus der resultierenden Bewegung heraus wird das Stückgut 3 um 90° gedreht und durch den Querförderer, z. B. 5, weiterbefördert.

Durch die Anordnung des Exzenter-Kurbelantriebes 27 erfolgt die Rückhubbewegung in einer kürzeren Zeit als der Vorhub, so daß in Verbindung mit der besonderen Formgestaltung des Abschiebearms 14 der Sicherheitsabstand zwischen den Stückgütern 3 relativ gering gehalten werden kann, und z. B. nur 50 cm zu betragen braucht.

Während der Rückhubbewegung darf das nächste Stückgut schon wieder in den Bereich der Aussortiervorrichtung 4 einlaufen.

Man erkennt somit deutlich aus der Zeichnung folgende wichtige Merkmale der Erfindung:

Die Anlagefläche 24 des Abschiebearms 14 steht in Ausgangsstellung annähernd parallel zur Hauptförderrichtung 1 des Hauptförderers 2.

Die Drehpunktanordnung des Schwenkarms 15 in Abhängigkeit von den unterschiedlichen wirksamen Armlängen des Schwenkarms 15 und des Antriebsarms 22 ermöglichen, daß der Abschiebearm 14 in seiner maximalen Schwenklage unter z. B. 30° zur Förderrichtung 1 steht.

Die besondere Formgebung des Abschiebearms 14 ermöglicht, daß das Stückgut 3 relativ weich abgeschoben wird. Große bzw. lange Stückgüter 3 können sich besser weiter auf 90° drehen, da mehr Freiraum gegeben ist.

Zusätzlich erlaubt die Formgebung des Abschiebearms 14 einen kleineren Sicherheitsabstand zwischen Stückgütern 3, z. B. Paketen.

Für die Vorschwenkbewegung steht eine längere Zeit als für die Rückschwenkbewegung zur Verfügung.

Die Vorschwenkbewegung erfolgt in der ersten Hälfte der Exzenterbewegung relativ langsam, so daß das Stückgut 3 nur geringen Beanspruchungen ausgesetzt ist. In der zweiten Hälfte der Exzenter-Vorbewegung wird das Stückgut 3 stärker beschleunigt und zusätzlich stärker gedreht. In Verbindung mit einer Abzugsrolle 11 wird durch diese Rotationsbewegung das Stückgut 3 nach einer relativ kurzen Vorschwenkbewegung annähernd um 90° absortiert.

Durch Ausgestaltung der Aussortiervorrichtung 4 mit den zwei Armen 15 und 22 erfolgt eine zusätzliche Relativbewegung B (Fig. 2) in Hauptförderrichtung 1, jedoch nur eine geringe Relativbewegung zwischen Stückgut 3 und Anlagefläche 24 des Abschiebearmes 14.

Dadurch, daß sich in der ersten Hälfte der Vorschwenkbewegung die Stellung der Anlagefläche 24 nur geringfügig in Hauptförderrichtung 1 ändert, besteht hier die besondere Möglichkeit, auch mittig auf der Förderstrecke ausgerichtetes Stückgut 3 sicher abzuschieben.

Ein weiterer Vorteil der Erfindung, der daraus resultiert, daß der Abschiebearm 14 das Stückgut 3 in eine Rotationsbewegung versetzt und deshalb der Schwenkwinkel zur Hauptförderrichtung 1 relativ klein gehalten werden kann, besteht darin, daß sein mittleres wirksames Trägheitsmoment wesentlich kleiner ist, als dasjenige bekannter Ausführungen. Dadurch sind kürzere Schwenkzeiten des Abschiebearms 14 möglich.

Bei der erfindungsgemäßen Ausführungsform lassen sich z. B. 5.000 bis 9.000 Stückgüter 3 pro Stunde, vorzugsweise etwa 5.000 bis 6.000 Stückgüter 3 pro Stunde, in Kombination mit Gurt- oder Stahlbändern mit Abzugsrolle 11 und/oder Abzugsförderer sicher aussortieren.

Mit der beschriebenen Ausführungsform wird eine sichere und spiel freie Ausführung der gelenkig miteinander verbundenen Teile der Aussortiervorrichtung 4 erreicht.

Durch die Verstellung A des Kurbeltriebes 26, 27 kann die Grundstellung des Abschiebearms 14 den erförderlichen Gegebenheiten angepaßt werden.

Bevorzugte Grundstellung des Abschiebearms 14 ist in dargestellter Ausführung ca. 25 mm über Außenkante 25 (Fig. 5) des Hauptförderers 2.

Die in der Zusammenfassung, in den Patentansprüchen und in der Beschreibung beschriebenen sowie aus der Zeichnung ersichtlichen Merkmale können sowohl einzeln als auch in beliebigen Kombinationen für die Erfindung wesentlich sein.

## Literaturverzeichnis

DE-OS 37 37 543.1-22
EP-OS 0 314 881
US-PS 4,298,117

## Bezugszeichenliste

1 Pfeil, Hauptförderrichtung
2 Hauptförderer
2a Obertrum des Hauptförderers
2b Untertrum des Hauptförderers
3 Stückgüter
4 Aussortiervorrichtung
5 Querförderer
6 Querförderer
7 Querförderer
8 Pfeilrichtung
9 Pfeilrichtung
10 Pfeilrichtung
11 Abzugsrolle
12 Abzugsrolle
13 Abzugsförderer
14 Abschiebearm
15 Schwenkarm
16 Schwenkachse
17 Gestell
18 Schwenkachse
19 Lagervorsprung
20 Lagervorsprung
21 Schwenkachse
22 Antriebsarm
23 Schwenkachse
24 Anlagefläche
25 seitliche Begrenzung des Hauptförderers 2
26 Kurbelstange
27 Exzenterantrieb
28 Antriebsmotor
29 Anlenkpunkt
30 Anlenkpunkt
A Verstellrichtung (Kurbeltrieb 26)
B Relativbewegung
X Schwenkrichtung des Schwenkarms 15
Y Schwenkrichtung des Schwenkarms 15
Z Bewegungsrichtung
$\alpha$ Drehwinkel (Vorlauf)
$\beta$ Drehwinkel (Rücklauf)
$\gamma$ Schwenkwinkel (Endlage)
$\delta$ Schwenkwinkel (Stellung bei $\alpha$/2)
$\epsilon$ Winkel
$\zeta$ Winkel

## Ansprüche

1. Aussortiervorrichtung, mit wenigstens einem motorisch angetriebenen Hauptförderer (2), auf dem Stückgüter (3) herangefördert werden, wobei dem Hauptförderer (2) mindestens ein motorisch antreibbarer Abzugs-oder Querförderer (5) zugeordnet ist, der das mittels eines motorisch betätigbaren Schwenkabschiebers auszusortierende Stückgut (3) wegfördert, wobei der Schwenkabschieber einen Schwenkarm (15) und einen Abschiebearm (14) aufweist und der Abschiebearm oberhalb der Oberfläche des Hauptförderers (2) motorisch hin- und herbeweglich angeordnet ist und diese Arme (14, 15) einen spitzen Winkel zueinander einnehmen, wobei in der Ruhestellung der Abschiebearm (14) annähernd parallel zur Förderrichtung (1) des Hauptförderers (2) in Höhe der Stückgüter (3) außerhalb des Transportbereichs der Stückgüter (3) oberhalb des Hauptförderers (2) positioniert ist, wobei der Abschiebearm (14) über einen Exzenterantrieb (27) antreibbar ist und die Aussortiervorrichtung (4) auf einer Seite des Hauptförderers (2) schwenkbeweglich angeordnet ist, wobei der Angriffspunkt des Exzenters (27) ggf. verstellbar ist, **dadurch gekennzeichnet, daß** der Abschiebearm (14) in der Ausgangsstellung der Abschiebebewegung mit einer Anlagefläche (24) parallel oder annähernd parallel zur Förderrichtung (1) des Hauptförderers (2) im Bereich der seitlichen Begrenzung (25) des Hauptförderers (2) angeordnet ist und daß mit dem Abschiebearm (14) ein Schwenkarm (15) und ein Antriebsarm (22) durch parallel zueinander verlaufende, vertikale Schwenkachsen (18, 21) gekuppelt ist, wobei sowohl der Schwenkarm (15) als auch der Antriebsarm (22) um je eine ortsfeste Schwenkachse (16, 23) in horizontaler Ebene schwenkbeweglich angeordnet sind, derart, daß der Abschiebearm (14) sich dicht oberhalb der Oberfläche des Obertrumes (2a) des Hauptförderers (2) bewegt und daß mit dem Antriebsarm (22) eine Kurbelstange (26) des Exzenterantriebs (27) getrieblich verbunden ist, der durch einen Motor (28) langetrieben ist, wobei der Abschiebearm (14) über seinen Schwenkhub seinen Angriffswinkel in bezug auf das betreffende Stückgut (3), vorzugsweise unstetig, verändert.

2. Aussortiervorrichtung nach Anspruch 1, **dadurch gekennzeichnet, daß** die Länge des Antriebsarms (22) erheblich größer als die Länge des Schwenkarms (15) bemessen ist, und vorzugsweise doppelt so groß ist oder ein Mehrfaches der Länge des Schwenkarms (15) beträgt.

3. Aussortiervorrichtung nach Anspruch 1 und/oder 2, **dadurch gekennzeichnet, daß** der Schwenkarm (15) an dem einen Ende des Abschiebearms (14) angelenkt ist, während der Antriebsarm (22) im mittleren Längenbereich des Abschiebearms (14) mit dem Abschiebearm (14) gekuppelt ist.

4. Aussortiervorrichtung nach Anspruch 1 oder 2 oder einem der folgenden, **dadurch gekennzeichnet,** daß der Abschiebearm im Querschnitt ein U-Profil ist, dessen U-Schenkel in horizontalen Ebenen angeordnet sind, während der Steg vertikal verläuft und eine breite Anlagefläche (24) für das Stückgut (3) bildet.

5. Aussortiervorrichtung nach Anspruch 1 oder einem der folgenden, **dadurch gekennzeichnet,** daß die Schwenkachsen (18, 21) von Abschiebearm (15) und Antriebsarm (22) auf der dem Hauptförderer (2) abgewandten Seite des Abschiebearms (14) angeordnet sind und daß der Abschiebearm (14) in der Draufsicht aus zwei mit ihren großen Basisseiten aneinander anstoßenden Trapezen und einem an das kleinere Trapez anschließenden Rechteck gebildet sind, wobei diese Teile materialmäßig einstückig miteinander ausgebildet sind und Übergangsbereiche durch Radien abgerundet sind, wobei eine gemeinsame Basisseite alle drei Abschnitte auf der dem Schwenkarm (15) und dem Antriebsarm (22) zugekehrten Seite begrenzt, während die eine Seitenfläche des größeren Trapezabschnittes die Anlagefläche (24) für das Stückgut (3) aufweist.

6. Aussortiervorrichtung nach Anspruch 1 oder einem der folgenden, **dadurch gekennzeichnet,** daß der Abschiebearm (14) in seiner maximalen Schwenkstellung einen Winkel von etwa 25° bis 50° zur Förderrichtung (1) des Hauptförderers (2) aufweist.

7. Aussortiervorrichtung nach Anspruch 1 oder einem der folgenden, **dadurch gekennzeichnet,** daß der Exzenterantrieb (27) in beiden Richtungen (A) verstellbar ist.

8. Aussortiervorrichtung nach Anspruch 1 oder einem der folgenden, **dadurch gekennzeichnet,** daß im unmittelbaren Randbereich des Hauptförderers (2) dem betreffenden Querförderer (5) eine vorzugsweise motorisch angetriebene Abzugsrolle (11) zugeordnet ist, auf die das Stückgut (3) vom Abschiebearm (14) aufschiebbar ist.

9. Aussortiervorrichtung nach Anspruch 8, **dadurch gekennzeichnet,** daß die Abzugsrolle (11) an ihrer äußeren Mantelfläche zylindrisch ausgebildet ist und ggf. eine reibungserhöhende Ummantelung aufweist.

10. Aussortiervorrichtung nach Anspruch 8, **dadurch gekennzeichnet,** daß die Abzugsrolle (11) an ihrer äußeren Mantelfläche konisch verlaufend ausgebildet ist und eine reibungserhöhende Ummantelung aufweist.

11. Aussortiervorrichtung nach Anspruch 1 oder einem der folgenden, **dadurch gekennzeichnet,** daß der Querförderer (5) eine Rutsche oder eine motorisch angetriebene Rollenbahn oder einen Gurtförderer aufweist.

12. Aussortiervorrichtung nach Anspruch 1 oder einem der folgenden, **dadurch gekennzeichnet,** daß der Motor (28) in einem Gestell (17) unterhalb des Abschiebearms (14), des Schwenkarms (15) und des Antriebsarms (12) sowie seitlich vom Hauptförderer (2) angeordnet ist.

13. Aussortiervorrichtung nach Anspruch 1 oder einem der Ansprüche 2 bis 11, **dadurch gekennzeichnet,** daß der Antriebsmotor (28) oberhalb des Abschiebearms (14) angeordnet ist.

Fig.1

Fig.2

EP 0 401 469 A1

Fig.3

EP 0 401 469 A1

Fig.4

Fig.5

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | <u>DE - B - 2 242 457</u> (SCHWEIZERISCHE EIDGENOSSEN-SCHAFT) * Fig. 2 * ____ | 1 | B 65 G 47/53 B 65 G 47/46 |

RECHERCHIERTE SACHGEBIETE (Int Cl⁵)

B 65 G

Der vorliegende Recherchenbericht wurde für alle Patentansprüche erstellt.

| Recherchenort WIEN | Abschlußdatum der Recherche 10-09-1990 | Prüfer PISSENBERGER |
|---|---|---|